# EUROPEAN PATENT APPLICATION

(11) **EP 4 844 714 A1**
(43) Date of publication of application: **25.11.2026**
(21) Application number: 26165992.4
(22) Date of filing: 19.03.2026
(51) Int. Cl.: G07C 9/00, G06Q 10/02, G06Q 50/12, G07C 9/27

(54) **INTELLIGENT LOCK MANAGEMENT SYSTEM AND MANAGEMENT METHOD**

(30) Priority: 19.05.2025 CN 202510646330
(71) Applicant: Pin Genie Inc., West Milford, NJ 07480 (US)
(72) Inventor: ZHENG, Li, Kowloon (HK)
(74) Representative: Santarelli

(57) **Abstract**

An intelligent lock control system and method are provided. The system includes: an online reservation module that generates a unique verification code and binds the unique verification code to a user identity; and a user equipment that triggers a Web portal to receive the verification code and control an intelligent lock to unlock. A user without a verification code initiates a video authentication request through the Web portal, and after remote verification by an administrator, a temporary verification code is generated to authorize access. An information service module integrated into the Web portal dynamically pushes information. The present disclosure is particularly suitable for identity verification and automated check-in management in hotel and short-term rental scenarios, and can significantly reduce hardware costs, operational costs, and user learning costs. In addition, access control is integrated with commercial services, and third-party information is pushed without compromising user privacy, thereby realizing the commercialization of a security ecosystem.

## Description

### Technical Field

The present disclosure relates to an intelligent access control system, and in particular, to an intelligent lock management system and method.

### Background of the Invention

With the improvement of people's living standards and the enhancement of their awareness of intelligent devices, the market of intelligent door locks has been promoted and popularized, especially in hotels and short-term rental apartments with high personnel mobility. Existing intelligent door locks for hotels and short-term rental apartments usually adopt an IC card or a mobile phone APP to control a door lock system. However, the aforementioned door lock control manners have the following drawbacks:

IC Card: 1. This manner relies on front desk interaction, where guests need to queue at a front desk to collect room cards, resulting in poor convenience and a suboptimal experience. 2. IC cards are prone to being cracked, copied, or lost, leading to low security. 3. IC cards have high costs for production, recycling, and manual distribution. 4. IC cards cannot collect usage data, which is not conducive to optimizing operations. 5. Commercial services cannot be integrated.

Mobile Phone APP: 1. This APP must be downloaded, registered, and logged in before check-in. Due to concerns about personal information security, users are not easily receptive to installing the APP. Moreover, the low installation rate results in limited brand exposure, which is not conducive to brand operation and promotion. 2. Poor cross-platform compatibility: The APP needs to be maintained for iOS and Android platforms respectively, while direct unlocking is usually not supported on a Web terminal. 3. A door lock or gateway cannot be unlocked in an offline state, resulting in network dependence. 4. There is a risk of cloud channel hijacking. 5. The APP maintenance and promotion costs are high. 6. New functions require the release of new APP versions, and guests may not update in a timely manner. 6. Commercial services cannot be integrated, making it impossible to realize the commercialization of security.

### Summary of the Invention

Based on this, it is necessary to address the deficiencies in the related art and provide an intelligent lock management system and method.

An intelligent lock control system includes:
an intelligent lock accessory having an encrypted communication module;
a user equipment integrated with a display screen and a video communication module; and
a server system having a verification code generation and verification module.

The user equipment triggers an installation-free Web portal through NFC or QR codes. The Web portal integrates verification code verification, video call biometric verification, an intelligent unlocking function, and an information service push function.

Further, the intelligent lock control system includes:
a verification code processing module: communicating with the server system to receive and
verify the validity and timeliness of the verification code;
a video call biometric verification module: performing two-way video communication with an administrator terminal; and
a dual-channel authorized unlocking controller, including:
   an automatic authorization channel: unlocking after the verification code is verified; and
   a manual authorization channel: unlocking after receiving an authorization instruction from the administrator terminal.

Further, the intelligent lock control system includes:
a biometric acquisition module: acquiring biometrics and storing the biometrics in a database of a server; and
a dual-channel authorized biometric acquisition controller, including:
   an automatic authorization channel: activating a biometric acquisition module after the verification code is verified; and
   a manual authorization channel: receiving an instruction from the administrator terminal to activate the biometric acquisition module.

Further, the intelligent lock control system includes:
an information service module for pushing surrounding scenic spots and restaurants based on user preferences and geographical locations;
a logistics information module connected to a third-party delivery system and displaying a package arrival status in real time; and
a facility guide displaying an in-room WIFI password and equipment operation instructions through an interactive map.

Further, the server system includes a reservation management module configured to receive an online reservation request, generate a unique verification code, and store associated user information and reservation data in the database.

Further, an administrator control module is included to support remote forced unlocking, locking, and revocation of abnormal credentials after verifying a binding relationship between biometrics of an administrator and a unique ID.

Further, the third-party information service module includes a content engine that generates property information and other information based on user data and xy coordinates.

Further, the information service module includes a dialog engine integrating Al dialogs and manual customer service functions.

Further, the information service module includes a third-party permission management module that controls the delivery of third-party content based on a biometric verification result.

Further, the Web portal is provided with a promotion position. The information service module further includes a priority module configured to dynamically adjust the content and interface layout of the promotion position according to alarm levels and user preferences.

Further, the intelligent lock control system includes:
an administrator business interface: connected to the server system and receiving a business data packet;
a business contribution interface: connected to the server system;
a dual-channel authorized business contribution device, including:
   an automatic authorization channel: activating the business contribution interface after the verification code is verified; and
   a manual authorization channel: receiving an instruction from the administrator terminal to activate the business contribution interface; and
   a content review engine: detecting contributed content in real time.

An intelligent lock control system includes:
a server system, configured to generate and verify a verification code;
a user equipment, which triggers and starts a remote management platform and establishes communication with an intelligent lock through an encrypted credential;
the remote management platform, which receives user operation instructions; and an intelligent lock terminal, configured to parse control instructions issued by the remote management platform and execute locking and unlocking operations.

Further, the intelligent lock control system includes:
a verification code processing module: communicating with the server system to receive and verify the validity and timeliness of the verification code;
a video call biometric verification module: performing two-way video communication with an administrator terminal; and
a dual-channel authorized unlocking controller, including:
   an automatic authorization channel: unlocking after the verification code is verified; and
   a manual authorization channel: unlocking after receiving an authorization instruction from the administrator terminal.

Further, the intelligent lock control system includes:
a biometric acquisition module: acquiring biometrics and storing the biometrics in a database of a server; and
a dual-channel authorized biometric acquisition controller, including:
   an automatic authorization channel: activating a biometric acquisition module after the verification code is verified; and
   a manual authorization channel: receiving an instruction from the administrator terminal to activate the biometric acquisition module.

Further, the remote management platform is provided with a promotion position, configured to dynamically adjust display content and an interface layout according to priorities and user preferences.

An intelligent lock control method includes the following steps:
step 1: after a user completes an online reservation, sending, by a server system, a verification code to the user;
step 2: triggering, by the user, a remote management platform through a user equipment, entering the verification code, triggering an intelligent lock to unlock, if the user has no valid verification code, starting a video communication module on the remote management platform, and issuing, by an administrator, a temporary verification code to authorize login after approval; and
step 3: after successful login, loading, by the remote management platform, information service content, and feeding back user interaction behavior data to an information service module for optimizing pushes.

Further, in step 2, after identity verification is passed, a biometric acquisition module is activated, and a time-limited biometric acquisition window is opened.

Further,
in step 2, if the user has no valid verification code, an administrator terminal directly sends an instruction to authorize unlocking or authorize biometric acquisition through a manual authorization channel.

Further, the method includes a step of business information injection:
after the user passes the verification of the verification code or receives an instruction from the administrator, triggering a business contribution interface, generating, by contributed picture content, a review request packet, detecting, by a content review engine, illegal content in a contribution in real time, and after the administrator passes liveness verification (video and pre-stored data), storing business content in the information service module for pushing.

Further, the method includes permission revocation: initiating, by the administrator, a permission revocation request through a remote management platform, verifying, by the system, a binding relationship between biometrics of the administrator and a unique ID, after the verification is passed, generating an encrypted revocation instruction to be sent to a target intelligent lock, receiving, by the intelligent lock terminal, the instruction, updating a permission list, and synchronizing the permission list to a database.

In summary, the management system of the present disclosure has the following advantages:
1. Ultra-simplified check-in: There is no requirement for downloading or registration, minimizing friction in the process from "arrival at the hotel" to "room access", which is particularly user-friendly for high-mobility scenarios and late-night check-ins.
2. Offline guarantee: Local unlocking via BLE eliminates "network/cloud anomalies" as a pain point during check-in, improving stability and security.
3. Security and controllability: The manner of one-time eBadge + encrypted BLE channel + real-time backend revocation is far superior to physical keys or duplicable room cards.
4. Operational cost reduction: The production of room cards and front desk staffing are eliminated, and a single front end is compatible with two major mobile platforms, reducing development and maintenance investments.
5. Scalable operations: The Portal serves not only as an unlocking entry but also as a touch point for information and value-added services (Wi-Fi, surrounding merchant discounts, membership marketing, etc.), creating secondary revenues.

The control system is applied to hotel and short-term rental scenarios, and can significantly reduce hardware costs, operational costs, and user learning costs.

### Brief Description of the Drawings

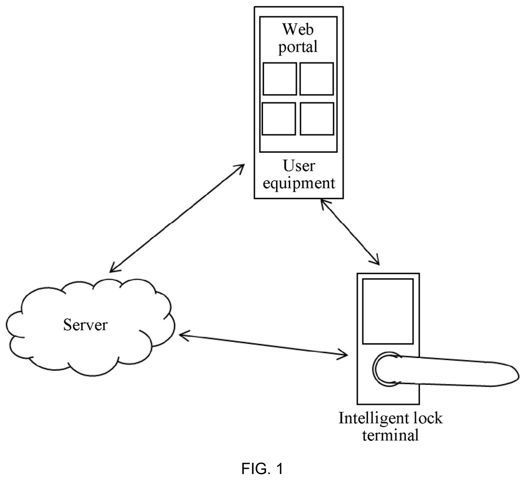

FIG. 1 is a schematic architectural diagram of a management system;

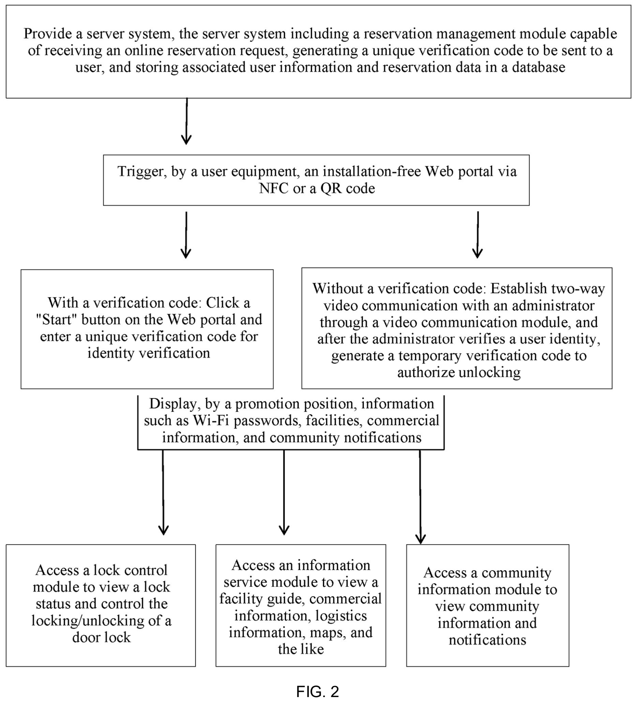

FIG. 2 is a schematic flowchart of a management system;

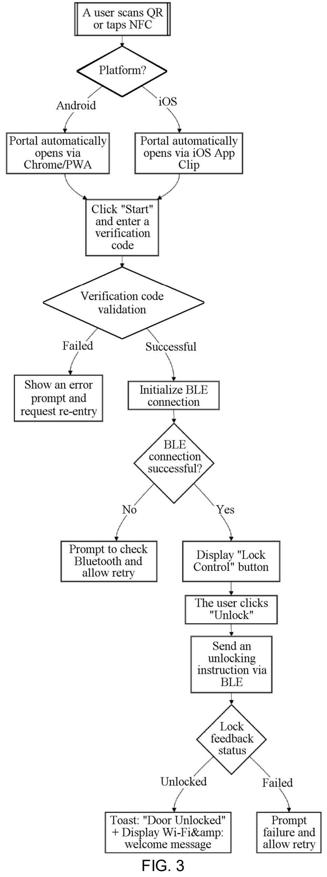

FIG. 3 is a schematic flowchart of intelligent unlocking;

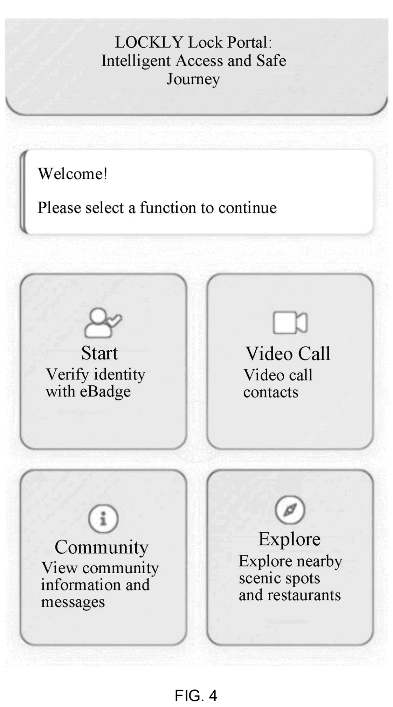

FIG. 4 is a panel screen of a web portal;

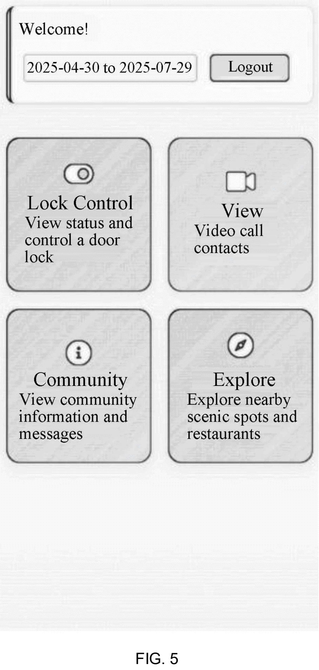

FIG. 5 is a management panel screen after successful identity verification and registration; and

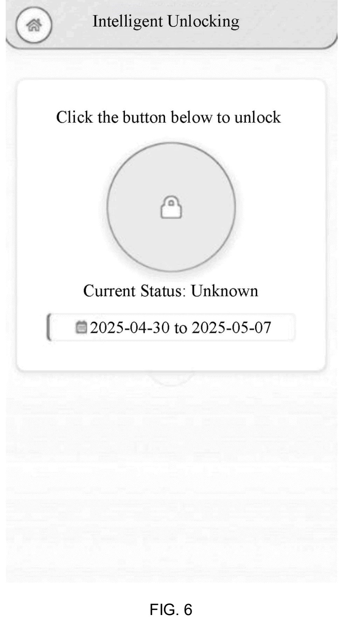

FIG. 6 is an intelligent unlocking operation screen opened by clicking a lock control button in FIG. 5.

### Detailed Description of Embodiments

To make the objectives, technical solutions, and advantages of the present disclosure clearer, the present disclosure will be further described in detail below with reference to the accompanying drawings and embodiments. It should be understood that specific embodiments described herein are only for explaining the present disclosure and are not intended to limit the present disclosure.

An intelligent lock management system based on an installation-free web application includes: an intelligent lock terminal, a server system, a user equipment, and a remote management platform. The server system generates an encrypted credential. The user equipment triggers and starts the remote management platform and establishes communication with an intelligent lock through the encrypted credential. The remote management platform receives user operation instructions through a browser. The intelligent lock terminal is configured to parse control instructions issued by the remote management platform and execute locking and unlocking operations.

Alock controller is installed on the intelligent lock terminal. The lock controller is integrated with a BLE and NFC reading module. Each intelligent lock is equipped with a unique ID of QR Code + NFC Tag. A web portal may be accessed to log in and control the lock by scanning a QR Code or NFC Tag associated with the lock.

In another embodiment, an RFID reader/writer may further be included to facilitate direct card swiping for unlocking with a pass card, improving the diversity of access manners. A QR code display screen is further included for displaying the QR code. In the absence of a QR code display screen, the QR code may be in a physical form (e.g., printed on paper and then affixed to a clearly visible location such as a door or a panel).

In another embodiment, the intelligent lock terminal includes an intelligent lock body and an intelligent lock accessory having an encrypted communication module. The intelligent lock accessory is connected to the intelligent lock body. The intelligent lock controller is integrated into the intelligent lock accessory. Thus, during system retrofitting, intelligent system control can be achieved by configuring the intelligent lock accessory to establish a signal connection with the intelligent lock, without the need to replace the original intelligent lock body, thereby reducing the equipment cost of purchasing a new intelligent lock body.

The server system includes a verification code generator, a biometric acquisition module, a database, and a real-time communication relay. Specifically, the server system receives a reservation request from a user terminal through an HTTPS protocol, and the verification code generator generates an encrypted verification code containing a timestamp and geographical location information. Further, a verification code with a time-limited access permission may be set according to time limit requirements. The verification code is invalid after an access time limit expires. The verification code generator generates verification codes in multiple modalities such as numbers, letters, text, images, QR codes, and sounds according to preset rules and user needs. For example, in an access control system, an administrator may generate a specific voice verification code through the module and send the voice verification code to a user.

The database stores verification code information, user biometric data (including but not limited to facial, fingerprint, and voice features), and the like. All data acquired and stored by the database is required to comply with the provisions of GDPR (General Data Protection Regulation)/CCPA (California Consumer Privacy Act) to avoid infringing on privacy rights. In addition, the database may provide tamper-proof and traceable storage and verification capabilities for a large amount of real-time data generated during system operation through a blockchain evidence storage network, such as environmental data, operation logs (e.g., unlocking, revocation, and permission changes), user biometric data, and user behaviors.

The biometric acquisition module includes a fingerprint sensor and a 3D camera for acquiring and authenticating fingerprints and other biometrics (e.g., face, palm prints, and voice prints). The biometric acquisition module may be arranged on the intelligent lock terminal or other edge devices. In this embodiment, a dual-channel authorized biometric acquisition controller is further included. The dual-channel authorized biometric acquisition controller includes: an automatic authorization channel that activates the biometric acquisition module after the verification code is verified and a manual authorization channel that receives an instruction from an administrator terminal to activate the biometric acquisition module. The foregoing acquisition manners are both remotely controlled and entered by the administrator. On-site verification and entry by the administrator and the user may further be included. In remote authorization, the security of video verification combined with instructions is higher.

In another embodiment, the biometric acquisition module includes an acquisition device and an authentication device. The acquisition device and the authentication device each include a fingerprint acquisition device and a camera. The acquisition device is configured to acquire biometric information. The authentication device is arranged at an access control. The server system further includes a reservation trigger module. The reservation trigger module is configured to: create, after a customer completes an online reservation, an eBadge (electronic credential) upon reservation generation on a network platform, and automatically send a communication message to a guest (via short message/SMS/email, etc.). The communication message includes QR scanning guidance information and anti-phishing verification elements (accommodation identification and timeliness statement).

The user equipment is configured to: trigger and start the web portal, execute a platform-specific startup protocol, and establish BLE communication with intelligent lock hardware. The web portal is triggered and started via a QR code or an NFC tag. Android uses PWA and iOS uses App Clip to execute the platform startup protocol. The user equipment is integrated with a display screen and a video call module. In this embodiment, the user equipment is a mobile phone. In other embodiments, the user equipment may alternatively be a tablet computer or other devices with equivalent functions, which is not limited herein.

In this embodiment, the remote management platform is a web portal. The implementation manner of the web portal is: directly accessing Bluetooth services through a Web BLE API on an Android device; and invoking a Core NFC framework via App Clip to read an encrypted tag on an iOS device.

The web portal is provided with a first display portion. The first display portion is provided with virtual buttons corresponding to a lock control module, a video communication module, a community information module, and an information service module. Verification code verification, call functionality, intelligent unlocking, and third-party information service functions are integrated. An identity verification and check-in button of the lock control module may be switched to an unlocking module page via a switcher. The video communication module may be switched to a video interface via the switcher. The community information module may be switched to a community information and notification display interface via the switcher. The information service module may be switched to a third-party information service function display interface via the switcher.

A verification code verification module includes a multi-modal receiver, a verification processing module, and an output module. The multi-modal receiver includes an entry unit, a camera unit, and a microphone unit. The entry unit is configured to receive numbers, letters, and text content entered by the user. The camera unit is configured to scan and recognize images and QR codes. The microphone unit is configured to receive voice verification codes. For example, when the user performs lock verification, the received voice verification code may be played to a door lock through a microphone, and the microphone unit of the door lock collects a voice.

The received information is transmitted to the verification processing module for parsing and verification. For numbers, letters, and text content, user-entered content is compared with a preset verification code. Images and QR codes are recognized through an image recognition algorithm and a QR code decoding algorithm, and matched with preset information. For voice verification codes, a voice recognition technology is used for converting a sound received by the microphone into text information, which is combined with voiceprint information for comparison and authentication with the preset verification code.

The output module outputs corresponding feedback information according to a verification result of the verification processing module. If the verification is correct, instructions such as unlocking and authorization are sent to the system. If the verification is incorrect, the user is prompted of verification failure and required to re-verify.

In this embodiment, after successful verification, the user enters an interface of an intelligent unlocking module from an entrance of the module and clicks an unlocking button to implement an unlocking operation. The video communication module is a Web RTC video communication component embedded in the web portal, enabling two-way video intercom without additional plug-ins. Real-time encrypted video streams may be provided to realize visitor whitelist management in combination with Al face recognition. If the user does not have an eBadge, the user may contact management personnel online through the video communication module to establish two-way video communication between the user and the administrator, and present an identity document if necessary. After the administrator passes the verification, an eBadge is directly sent to the web portal for authorization verification on an intercom page, to automatically complete login and check-in.

In this embodiment, a dual-channel authorized unlocking controller is further included. The dual-channel authorized unlocking controller includes: an automatic authorization channel that unlocks after the verification code is verified and a manual authorization channel that unlocks after receiving an authorization instruction from the administrator terminal. In remote authorization, the security of video verification combined with instructions is higher.

After successful unlocking, real-time environmental guidance data is generated. Sensitive information (Wi-Fi password, facilities, or latest information of a landlord) is dynamically bound to a lock state. Specifically, after successful unlocking, the web portal enters a contextual information panel. The contextual information panel includes a lock control module (for viewing the lock state and controlling the door lock), a video call module (capable of querying contacts and communicating), a community information module (for viewing community information and messages), and a search module (for searching nearby scenic spots and restaurants).

The information service module includes a facility guide, a third-party information service module, a logistics information module, and a map module. The third-party information service module pushes commercial information of surrounding merchants based on user preferences and geographical locations. The logistics information module is connected to a third-party delivery system to display a package arrival status in real time. The facility guide displays an in-room Wi-Fi password and equipment operation instructions through an interactive map. In addition, the user may place orders online through the module and view delivery information in real time. The user preferences are obtained through a user preference acquisition module. The user preference acquisition module is configured to obtain user preference data. The preference data includes historical behavior records, manually entered preference tags, or interest classifications exported from a third-party platform. The geographical location is obtained through a geographical location obtaining module, which is configured to receive current geographical location information about the user in real time. The obtaining of the foregoing data complies with GDPR/CCPA regulations.

In addition, the web portal is further provided with a promotion position. The promotion position is configured for pushing commercial information services, community notifications, logistics status, and facility usage guide information, and optimizing a push policy based on user behavior data.

After the user passes identity verification, commercial information is generated and pushed based on user data and xy coordinates (user location, such as geofence coordinates and user behavior tags). Further, a surrounding service recommendation algorithm may be adopted to preferentially display business premises open during a current time period.

Further, the information service module includes a priority module configured to dynamically adjust an interface layout of the promotion position according to alarm levels. For example, after placing an online order, if there is a courier delivery, a delivery progress is preferentially displayed. In the event of a fire, the mode is automatically switched to a full-screen alarm mode (emergency event codes are obtained through a property API).

Further, a third-party permission management module that controls the delivery of commercial information content based on biometric verification results is included. User biometrics (such as face recognition or voice) may be compared in real time during video calls, and contextually relevant commercial information is dynamically inserted to improve resource utilization.

Specifically, the information service module is further integrated with Al dialog (automatic) and customer service dialog (manual) to improve user experience. The user asks questions by voice. An NLP (Natural Language Processor) parses the voice, retrieves relevant information through the database, and then feeds back an answer to the user equipment in the form of text or voice. The information service module associates relevant commercial information for pushing in combination with the question of the user. For example, if the user queries property fee payment through Al dialog, the system automatically pushes preferential information of cooperative banks or platforms in the promotion position. After the user consults the location of a courier cabinet, the promotion position pushes preferential information of logistics companies. If the Al cannot answer the question, manual customer service is automatically switched, and historical dialog records are synchronized. During video communication, if the user is identified as a merchant through security data analysis, commodity and commercial information relevant to the user may be recommended.

Further, a machine learning algorithm may be adopted to analyze the check-in duration, behavior patterns, and habits and preferences of the user, and push scenario-based commercial information. For example, if the user frequently visits catering stores, promotional information of nearby catering merchants is sent. If the user queries information about dance studios multiple times, commercial information of nearby dance training merchants is pushed.

In the present disclosure, the acquisition and reading of all involved data comply with GDPR/CCPA regulations. On the premise of complying with regulations, access control is integrated with commercial services, and commercial information is pushed without compromising user privacy, thereby realizing the commercialization of a security ecosystem.

The web portal further includes an administrator control panel configured to: generate time-limited QR/NFC tags. Furthermore, an eBadge may be generated with one click to control access to rooms, community access control, and public spaces, and guests are required to tap at corresponding devices. The status of all door locks is monitored in real time, and remote forced unlocking/locking is supported. Guests are disabled, and a disabled blacklist is set. Abnormal credentials are revoked, and the update of the blacklist at door lock hardware is triggered. Complete guest operation logs (including full-link records from a scanning time to a door lock response) are checked.

The method for the administrator to perform revocation is: initiating, by the administrator, a permission revocation request through the Web portal; verifying, by the system, a binding relationship between biometrics of the administrator (fingerprint or face) and a unique ID; after the verification is passed, generating an encrypted revocation instruction to be signed by an edge node and sent to a target intelligent lock; and receiving, by the intelligent lock, the instruction, updating a permission list, and synchronizing the permission list to the database of the system.

Further, after the administrator executes a revocation operation, a hardware-level blacklist update is pushed to a target door lock, rendering the revoked QR code/NFC tag or eBadge immediately invalid even if it is within a validity period.

Further, hierarchical verification may be set. For local operation revocation behaviors, only fingerprint verification may be required. For remote operations, multiple authentications are required to be performed on an administrator panel of the web portal via a panel or a mobile phone for passing. For example, a combination of a plurality of factors such as unique ID, fingerprint, face recognition, and short message verification may be required simultaneously. Furthermore, multiple authentication modes are also triggered when an IP address is abnormal or a new login device is used.

Further, in a management system having a plurality of administrators, multi-administrator collaborative approval is also set up, implementing multi-party signature approval through blockchain. For example, when a hotel staff member resigns and revocation is performed, two-level administrator biometric authentication is required to execute the revocation, so as to avoid misoperation behaviors. In addition, after the revocation operation is completed, an encrypted notification may be automatically sent to the affected user.

In another embodiment, the web portal may alternatively be integrated into a display screen of the intelligent lock terminal, facilitating various operations through the interface in scenarios where the user forgets to bring the user equipment.

In addition, a business information management module is further included, including: an administrator business interface: connected to the server system and receiving a business data packet;
a business contribution interface: connected to the server system;
a dual-channel authorized business contribution device, including:
   an automatic authorization channel: activating the business contribution interface after the verification code is verified; and
   a manual authorization channel: receiving an instruction from the administrator terminal to activate the business contribution interface; and
   a content review engine: detecting contributed content in real time.

After a merchant passes the verification of the verification code or receives an instruction from the administrator, the business contribution interface is triggered, contributed picture content generates a review request packet, a content review engine detects illegal content in a contribution in real time, and after the administrator passes liveness verification (video and pre-stored data), business content is stored in the information service module for pushing.

In another embodiment, a method is further disclosed. The method is implemented using the foregoing intelligent lock management system.

The specific management method steps of the system are as follows:
Step 1: An online reservation is completed, and a reservation trigger module automatically generates an eBadge, where the eBadge is a one-time, time-limited verification code that may be remotely invalidated. Specifically, the system invokes an API to generate an encrypted verification code and sends the verification code to a user via a short message or an email.
Step 2: After arriving, the user scans a QR code of an intelligent lock terminal with a mobile phone or taps an NFC tag to trigger the automatic startup of a web portal. The web portal automatically loads four functional modules: identity verification, intelligent unlocking, video call, and third-party information service push, without requiring App downloading.

For Android systems, a Web BLE session is initiated through a Chrome browser, and a PWA control panel is loaded. For iOS, a lightweight portal is loaded by invoking App Clip.

Step 3: "Start (Identity Verification & Check-in)" is clicked on the web portal, a pre-assigned 4-digit verification code is entered for server-side verification, and after successful verification, a Web BLE/App Clip connection is initialized.

Step 4: A direct Web BLE/App Clip pairing is established to form a secure connection with an intelligent lock. If the connection is successful, an intelligent unlocking interface is displayed to complete unlocking and self-service check-in.

If a visitor does not hold a verification code, a "Video Call" button on the web portal is clicked to invoke a device camera for communication with an administrator, and a temporary code is obtained after presenting an identity document. The temporary code may be entered for verification or sent from the administrator on a video interface for direct verification and unlocking.

Step 5: A lock status is fed back to a web interface (240) in real time. In a case of failure, an automatic retry mechanism is triggered (up to 3 attempts). In addition, after successful unlocking, the Portal automatically displays Wi-Fi, facilities, garbage classification, surrounding catering recommendations, and a promotion position. The pushed content is provided by partners, and catering discounts, scenic spot recommendations, and the like are displayed in time segments based on the check-in duration of the user. The promotion position push is optimized based on the reserved check-in duration, reserved room type information, and the like. If the connection fails, an error prompt, Bluetooth diagnosis guide, and retry instructions are displayed. When applied to micro-hotels and boutique hotels, the management system of this embodiment enables queue-free and contactless self-service check-in, reduces the front desk staffing cost during nighttime, and provides guests with a more modern and smooth check-in experience.

When applied to urban short-term rentals and Airbnb, the management system of this embodiment eliminates the need for landlords to be present for key handover, supports late-night/remote check-in, and allows guests to operate without an App, offering high convenience.

In summary, the management system of the present disclosure has the following advantages:
1. Ultra-simplified check-in: There is no requirement for downloading or registration, minimizing friction in the process from "arrival at the hotel" to "room access", which is particularly user-friendly for high-mobility scenarios and late-night check-ins.
2. Offline guarantee: Local unlocking via BLE eliminates "network/cloud anomalies" as a pain point during check-in, improving stability and security.
3. Security and controllability: The technical effects of the manner of one-time eBadge, encrypted BLE channel, and real-time backend revocation are far superior to physical keys or duplicable room cards.
4. Operational cost reduction: The production of room cards and front desk staffing are eliminated, and a single front end is compatible with two major mobile platforms, reducing development and maintenance investments.
5. Scalable operations: The Portal serves not only as an unlocking entry but also as a touch point for information and value-added services (Wi-Fi, surrounding merchant discounts, membership marketing, etc.), creating secondary revenues.

The control system is applied to hotel and short-term rental scenarios, and can significantly reduce hardware costs, operational costs, and user learning costs.

The foregoing embodiments merely represent several implementations of the present disclosure. While the descriptions thereof are relatively specific and detailed, they should not be construed as limiting the scope of the patent for the present disclosure. It should be noted that for those of ordinary skill in the art, several modifications and improvements may be made without departing from the concept of the present disclosure, and all such modifications and improvements fall within the protection scope of the present disclosure. Therefore, the protection scope of the patent for the present disclosure should be subject to the appended claims.

## Claims

1. An intelligent lock control system, comprising:
an intelligent lock terminal having an encrypted communication module;
a user equipment integrated with a display screen and a video communication module; and
a server system having a verification code generation and verification module, wherein
the user equipment triggers an installation-free client through a short-range trigger interface,
and the installation-free client is configured to integrally execute verification code verification,
video call biometric verification, an intelligent unlocking function, and an information service push function.

2. The intelligent lock control system according to claim 1, further comprising:
a verification code processing module: communicating with the server system to receive and
verify the validity and timeliness of the verification code;
a video call biometric verification module: performing two-way video communication with an administrator terminal; and
a dual-channel authorized unlocking controller, comprising:
an automatic authorization channel: unlocking after the verification code is verified; and
a manual authorization channel: unlocking after receiving an authorization instruction from the administrator terminal.

3. The intelligent lock control system according to claim 1, further comprising:
a biometric acquisition module: acquiring biometrics and storing the biometrics in a database of a server; and
a dual-channel authorized biometric acquisition controller, comprising:
an automatic authorization channel: activating a biometric acquisition module after the verification code is verified; and
a manual authorization channel: receiving an instruction from the administrator terminal to activate the biometric acquisition module.

4. The intelligent lock control system according to claim 1, wherein the installation-free client is further integrated with an information service module, and the information service module comprises:
a third-party information service module for pushing surrounding scenic spots and restaurants based on user preferences and geographical locations;
a logistics information module connected to a third-party delivery system and displaying a package arrival status in real time; and
a facility guide displaying an in-room WIFI password and equipment operation instructions through an interactive map.

5. The intelligent lock control system according to claim 1, wherein the server system further comprises a reservation management module configured to receive an online reservation request, generate a unique verification code, and store user information and reservation data in the database.

6. The intelligent lock control system according to claim 1, further comprising: an administrator control module, which executes remote forced unlocking, locking, or revocation of abnormal credentials after verifying a binding relationship between biometrics of an administrator and a unique ID.

7. The intelligent lock control system according to claim 4, wherein the information service module comprises a content engine that generates property information and other information based on user data and geographical location coordinates.

8. The intelligent lock control system according to claim 4, wherein the information service module further comprises a dialog engine integrating Al dialogs and manual customer service functions.

9. The intelligent lock control system according to claim 4, wherein the information service module further comprises a third-party permission management module that controls the delivery of third-party content based on a biometric verification result.

10. The intelligent lock control system according to claim 4, wherein the installation-free client is further provided with a promotion position, and the information service module further comprises a priority module configured to dynamically adjust the content and interface layout of the promotion position according to alarm levels and user preferences.

11. The intelligent lock control system according to claim 1, comprising:
an administrator business interface: connected to the server system and receiving a business data packet;
a business contribution interface: connected to the server system;
a dual-channel authorized business contribution device, comprising:
an automatic authorization channel: activating the business contribution interface after the verification code is verified; and
a manual authorization channel: receiving an instruction from the administrator terminal to activate the business contribution interface; and
a content review engine: detecting contributed content in real time.

12. The intelligent lock control system according to claim 1, wherein the installation-free client is a Web portal.

13. The intelligent lock control system according to claim 1, wherein the intelligent lock terminal is an integrated intelligent lock or an intelligent lock accessory having an encrypted communication module, the intelligent lock accessory being connected to a lock body and controlling the lock body.

14. The intelligent lock control system according to claim 1, wherein the short-range trigger interface is implemented by scanning a QR code or reading an NFC tag.

15. An intelligent lock control method, comprising the following steps:
step 1: after a user completes an online reservation, sending, by a server system, a verification code to the user;
step 2: triggering, by the user, an installation-free client through a user equipment, entering the verification code, triggering an intelligent lock to unlock after verification by the installation-free client, if the user has no valid verification code, starting a video communication module on the installation-free client, and issuing, by an administrator, a temporary verification code to authorize login and access after approval; and
step 3: after successful login, loading, by the installation-free client, information service content, and feeding back user interaction behavior data to an information service module for optimizing pushes.

16. The method according to claim 15, wherein
in step 2, after identity verification is passed, a biometric acquisition module is activated, and a time-limited biometric acquisition window is opened.

17. The method according to claim 15, wherein
in step 2, if the user has no valid verification code, an administrator terminal directly sends an instruction to authorize unlocking or authorize biometric acquisition through a manual authorization channel.

18. The method according to claim 15, further comprising a step of business information injection:
after the user passes the verification of the verification code or receives an instruction from the administrator, triggering a business contribution interface, generating, by contributed picture content, a review request packet, detecting, by a content review engine, illegal content in a contribution in real time, and after the administrator passes liveness verification (video and pre-stored data), storing business content in the information service module for pushing.

19. The method according to claim 15, further comprising permission revocation: initiating, by the administrator, a permission revocation request through a remote management platform, verifying, by the system, a binding relationship between biometrics of the administrator and a unique ID, after the verification is passed, generating an encrypted revocation instruction to be sent to a target intelligent lock, receiving, by the intelligent lock terminal, the instruction, updating a permission list, and synchronizing the permission list to a database.
